# EUROPEAN PATENT APPLICATION

(11) **EP 4 786 851 A1**
(43) Date of publication of application: **05.08.2026**
(21) Application number: 25867311.0
(22) Date of filing: 22.05.2025
(51) Int. Cl.: F23D 14/02, F23D 14/46, F23D 14/62, F23G 7/06

(54) **SINGLE-SIDE GAS INLET SOFC COMBUSTOR HAVING WIDE WORKING CONDITIONS AND LOW PRESSURE LOSS**

(30) Priority: 11.11.2024 CN 202411604522
(71) Applicant: Vastran Technology (Zhongshan) Co., Ltd., Zhongshan, Guangdong 528400 (CN)
(72) Inventor: CHEN, Bing, Zhongshan, Guangdong 528400 (CN); ZHANG, Yi, Zhongshan, Guangdong 528400 (CN)
(74) Representative: M. Zardi & Co S.A.
(86) International application number: PCT/CN2025/096592
(87) International publication number: WO 2026/097826

(57) **Abstract**

The present application relates to a single-sided gas intake SOFC burner with a wide operating range and a low pressure drop in the field of solid oxide fuel cells. A spark rod sleeve for disposing a spark rod is centrally positioned at the top of a combustion chamber of the burner; an anode off-gas distribution channel and a cathode off-gas distribution channel are further provided at the top of the combustion chamber, the anode off-gas distribution channel and the cathode off-gas distribution channel being sequentially annularly disposed around an outer periphery of the spark rod sleeve; and after passing through corresponding distribution channels that are independent from each other, anode off-gas and cathode off-gas are both configured to be uniformly introduced into the combustion chamber in a toroidal flow pattern. In the present application, the anode off-gas and the cathode off-gas are uniformly introduced into the combustion chamber in an annular manner, maintaining a uniform flow density on an annular section, such that the two types of off-gas are fully mixed within the combustion chamber. Ignition is performed centrally by the spark rod to avoid flame deviation, reduce local overheating, and achieve a stable combustion state, which helps to maintain stable combustion over a wide operating range and reduces a pressure drop caused by uneven gas distribution.

## Description

### CROSS-REFERENCE TO RELATED APPLICATION

The present application claims priority to Chinese Patent Application No. 202411604522.2, filed with the China National Intellectual Property Administration on November 11, 2024 and entitled "Single-sided gas intake SOFC Burner with Wide Operating Range and Low Pressure Drop", which is incorporated herein by reference in its entirety.

### TECHNICAL FIELD

The present application relates to the field of solid oxide fuel cells (SOFCs), specifically to a single-sided gas intake SOFC burner with a wide operating range and a low pressure drop.

### BACKGROUND

In a solid oxide fuel cell (SOFC) system, a burner is mainly used to maintain a thermal balance of the SOFC system and to meet the temperature regulation requirements of the system during operating stages such as heat-up, heat preservation, power generation, and cool-down. As a core component of the SOFC system, the burner needs to maintain stable and efficient combustion under different operating conditions while keeping a flow-path pressure drop as low as possible, so as to reduce back pressure of an upstream stack and power consumption of a system blower.

To meet the compact layout requirement of the SOFC system, the burner typically adopts unilateral gas intake. Since gas enters only from one side, gas flow distribution within a combustion chamber is uneven, which easily causes a flame to deflect toward one side, resulting in locally excessive temperatures, thereby leading to overheating of a metal wall surface. Moreover, prolonged excessive temperature of the metal wall surface can accelerate material aging, and even lead to structural failure, thereby affecting the service life of the burner and safe operation of the system.

Additionally, the temperature of off-gas discharged during stack operation is approximately 600-800°C. Such high-temperature inlet gas can further exacerbate the overheating of the wall surface. If the high-temperature off-gas directly entering the burner is not evenly distributed, hot spots may form in certain regions, causing the temperature of the metal wall surface to rise sharply. The high-temperature off-gas not only causes overheating of the wall surface, but also increases thermal stress, leading to material fatigue and damage, thereby affecting the reliability and service life of the burner.

The above issues need to be addressed.

### SUMMARY OF THE INVENTION

To overcome the problem of flame deflection in the existing combustion chamber caused by uneven off-gas flow distribution, the present application provides a single-sided gas intake SOFC burner with a wide operating range and a low pressure drop.

A technical solution of the present application is described as follows:

A single-sided gas intake SOFC burner with a wide operating range and a low pressure drop includes a combustion chamber, and an anode gas inlet pipe and a cathode gas inlet pipe which are located on the same lateral side, the combustion chamber being further provided with a spark rod, wherein a spark rod sleeve is centrally positioned at the top of the combustion chamber, and the spark rod is inserted into the spark rod sleeve and extends into the combustion chamber; an anode off-gas distribution channel and a cathode off-gas distribution channel are further provided at the top of the combustion chamber, the anode off-gas distribution channel being annularly disposed around an outer periphery of the spark rod sleeve, and the cathode off-gas distribution channel being annularly disposed around an outer periphery of a lower portion of the anode off-gas distribution channel; both the anode off-gas distribution channel and the cathode off-gas distribution channel are arranged with the spark rod as the center; the anode off-gas distribution channel communicates the anode gas inlet pipe with the combustion chamber, and the cathode off-gas distribution channel communicates the cathode gas inlet pipe with the combustion chamber; the spark rod sleeve, the anode off-gas distribution channel, and the cathode off-gas distribution channel are mutually isolated; and after passing through corresponding off-gas distribution channels that are independent from each other, anode off-gas and cathode off-gas are both configured to be uniformly introduced into the combustion chamber in a toroidal flow pattern.

As an optional technical solution of the present application, an insertion depth of the spark rod into the combustion chamber is adjustable along an axis of the spark rod sleeve.

As an optional technical solution of the present application, the anode off-gas distribution channel includes a first anode off-gas distribution chamber and a second anode off-gas distribution chamber sequentially sleeved around the outer periphery of the spark rod sleeve from outside to inside, wherein a side wall of the first anode off-gas distribution chamber is connected to the anode gas inlet pipe; a side wall of the second anode off-gas distribution chamber is provided with a first anode gas inlet hole for communicating the first anode off-gas distribution chamber with the second anode off-gas distribution chamber; and a bottom passage of the second anode off-gas distribution chamber extends downward along the spark rod sleeve and is connected to the combustion chamber.

As an optional technical solution of the present application, an anode off-gas nozzle is provided between a bottom passage of the anode off-gas distribution channel and a tail end of the spark rod sleeve, the anode off-gas nozzle including a nozzle sleeve body, wherein a plurality of inclined swirl vanes are provided on an outer peripheral surface of the nozzle sleeve body; and the nozzle sleeve body and the tail end of the spark rod sleeve are formed integrally, with a nozzle end cover plate formed at the junction therebetween, and a plurality of second anode gas inlet holes are uniformly formed in the nozzle end cover plate.

As an optional technical solution of the present application, the cathode off-gas distribution channel includes an outer peripheral cathode off-gas distribution channel and an inner peripheral cathode off-gas distribution channel, wherein a side wall of the outer peripheral cathode off-gas distribution channel is connected to the cathode gas inlet pipe; the top of the inner peripheral cathode off-gas distribution channel has an opening and is in communication with the top of the outer peripheral cathode off-gas distribution channel, and the bottom of the inner peripheral cathode off-gas distribution channel surrounds the combustion chamber; and the cathode off-gas is configured to enter the outer peripheral cathode off-gas distribution channel through the cathode gas inlet pipe, and flow upward and inward into the inner peripheral cathode off-gas distribution channel, and then flow downward into the combustion chamber.

Optionally, the outer peripheral cathode off-gas distribution channel includes a first cathode off-gas distribution chamber, a second cathode off-gas distribution chamber, and a third cathode off-gas distribution chamber arranged in a hierarchical distribution from bottom to top, wherein a first perforated plate is disposed between the first cathode off-gas distribution chamber and the second cathode off-gas distribution chamber, the first perforated plate being provided with a plurality of first cathode gas inlet holes ; and a second perforated plate is disposed between the second cathode off-gas distribution chamber and the third cathode off-gas distribution chamber, the second perforated plate being provided with a plurality of second cathode gas inlet holes, and the second perforated plate being provided in the middle thereof with a through hole that communicates the third cathode off-gas distribution chamber with the inner peripheral cathode off-gas distribution channel.

Optionally, the first cathode gas inlet holes include outer peripheral cathode gas inlet holes and inner peripheral cathode gas inlet holes, wherein the outer peripheral cathode gas inlet holes are distributed in a circumferential array along an outer periphery of the first perforated plate, and the inner peripheral cathode gas inlet holes are distributed in an arc pattern on a side of the first perforated plate close to the cathode gas inlet pipe; and the second cathode gas inlet holes are uniformly distributed along an outer periphery of the second perforated plate.

Optionally, an annular spoiler is centrally provided on a top wall of the third cathode off-gas distribution chamber, and the annular spoiler is configured to guide and disperse the cathode off-gas, such that the cathode off-gas uniformly flows toward the inner peripheral cathode off-gas distribution channel.

Optionally, the inner peripheral cathode off-gas distribution channel includes a fourth cathode off-gas distribution chamber and a fifth cathode off-gas distribution chamber arranged in a hierarchical distribution from top to bottom, wherein a third perforated plate is disposed between the fourth cathode off-gas distribution chamber and the fifth cathode off-gas distribution chamber, the third perforated plate being provided with third cathode gas inlet holes arranged in a plurality of ring patterns, with an annular guide plate being provided between every two adjacent ring patterns of the third cathode gas inlet holes, the annular guide plate being configured to disperse the cathode off-gas and direct gas flow.

As an optional technical solution of the present application, the combustion chamber has a truncated cone shape, and includes a top connecting plate, a middle inclined chamber wall, and a bottom connecting plate, wherein the top connecting plate is provided with an opening in the middle thereof and is connected to the anode off-gas distribution channel, and the bottom connecting plate is connected to the cathode off-gas distribution channel; and the top connecting plate is provided with a plurality of fourth cathode gas inlet holes distributed around an outer side of the anode off-gas distribution channel, the middle inclined chamber wall is provided with a plurality of fifth cathode gas inlet holes, and the bottom connecting plate is provided with a plurality of sixth cathode gas inlet holes.

Optionally, diameters of the plurality of the fifth cathode gas inlet holes on the middle inclined chamber wall gradually increase from top to bottom.

As an optional technical solution of the present application, an outer lateral wall of the bottom of the combustion chamber is formed by a side wall of the cathode off-gas distribution channel extending downward, and the outer lateral wall of the bottom of the combustion chamber is provided with a flame detector.

As an optional technical solution of the present application, the bottom of the combustion chamber is connected to a flue gas outlet pipe through a conical sleeve.

Optionally, a front end of the flue gas outlet pipe is provided with a flame baffle, and a middle portion of the flame baffle is connected to a cooling air inlet pipe, with a plurality of partition strips being uniformly distributed around the flame baffle, such that the flame baffle has a radial configuration.

Optionally, at least one temperature sensor is provided below the flame baffle of the flue gas outlet pipe.

The present application based on the above technical solution has the following beneficial effects:
1. In the present application, the anode off-gas and the cathode off-gas pass through corresponding off-gas distribution channels that are independent from each other, and are finally uniformly introduced into the combustion chamber in an annular manner. Rather than entering as a single concentrated fluid stream, the two types of off-gas are distributed along corresponding circular paths, maintaining a uniform flow density on an annular section and uniform velocity and concentration at an inlet cross-section of the combustion chamber, thereby facilitating thorough mixing of the two types of off-gas within the combustion chamber.
   The anode off-gas is in a central region of the combustion chamber, and the cathode off-gas encircles the anode off-gas, thereby meeting the off-gas arrangement and requirements for achieving complete combustion. Moreover, ignition is performed centrally by the spark rod to avoid flame deflection and reduce local overheating or incomplete combustion, thereby achieving a more stable combustion state, facilitating stable combustion over a wide operating range, and reducing a pressure drop caused by uneven gas distribution.
2. The anode off-gas is split into two streams at the anode off-gas nozzle. One stream of anode off-gas enters the combustion chamber as a jet when flowing through the second anode gas inlet holes, and the other stream of anode off-gas enters the combustion chamber in a rotating manner when flowing through the swirl vanes. In this combined gas intake mode, a recirculation vortex can be generated in the combustion chamber. On the one hand, the recirculating vortex enhances the mixing of the anode off-gas with the cathode off-gas in the combustion chamber, thereby effectively improving anode off-gas combustion efficiency of an SOFC system in various operating stages. On the other hand, by entraining high-temperature flue gas in the combustion chamber, the recirculation vortex can effectively maintain continuous and stable flame combustion.
3. The cathode off-gas in the unilateral gas intake mode first passes through the outer peripheral cathode off-gas distribution channel, and then passes through the inner peripheral cathode off-gas distribution channel. The rational gas flow path facilitates uniform dispersion of the cathode off-gas during flow. The structural design of the distribution chamber in which the outer peripheral cathode off-gas distribution channel is distributed in multiple layers enables the cathode off-gas to undergo multiple short residence times, further dispersing the cathode off-gas during flow, and ensuring that the cathode off-gas enters the inner peripheral cathode off-gas distribution channel in a relatively uniform manner. This reduces the pressure drop during gas flow, and ensures uniform distribution upon entering the combustion chamber so as to achieve effective mixing with the anode off-gas, thereby improving combustion efficiency.
4. The cathode off-gas is divided into three streams within the fifth cathode off-gas distribution chamber. A first stream of cathode off-gas enters the combustion chamber through the fourth cathode gas inlet holes. This portion of cathode off-gas can blow the high-temperature flue gas entrained by the recirculating vortex away from the top connecting plate to prevent overheating of the wall surface of the top connecting plate. A second stream of cathode off-gas enters the combustion chamber through the fifth cathode gas inlet holes. A portion of the cathode off-gas enters a flame region to participate in a combustion process so as to improve the combustion efficiency of the anode off-gas, and the other portion can form a gas flow protective layer between the high-temperature flame and the wall surface of the combustion chamber, thereby effectively preventing flame deviation and reducing heat transfer from the high-temperature flue gas to the wall of the combustion chamber. A third stream of cathode off-gas enters the combustion chamber through the sixth cathode gas inlet holes, such that a gas flow protective layer can be formed between the high-temperature flue gas and the bottom of the combustion chamber, the conical sleeve, and the flue gas outlet pipe, thereby preventing the high-temperature flue gas from eroding the metal wall and causing structural failure.
5. The spark rod is centrally positioned and is connected to a burner housing through threads to facilitate adjustment of an ignition position. A user can quickly adjust the insertion depth of the spark rod according to different combustion requirements to optimize the ignition effect. This simplifies maintenance work, facilitates replacement of the spark rod when necessary, and improves equipment reliability and maintenance efficiency.
6. Providing the flame baffle in the flue gas outlet pipe not only can prevent the combustion flame from being excessively long, thereby avoiding damage or adverse effects on rear-end heat exchanger components, but also can enhance the mixing of the high-temperature flue gas with the cathode off-gas, thereby reducing a circumferential temperature difference of a flue gas cross-section and improving heat-exchange efficiency of the rear-end heat exchange components.
7. With the cooling air inlet pipe provided at the center of the flame baffle, flue gas temperature at a burner outlet can be flexibly regulated by adjusting the amount of cooling air, without affecting a front-end combustion structure. Moreover, by generating turbulence through the flame baffle to enhance the mixing of the high-temperature flue gas with the cooling air, the influence of uneven flue-gas temperature on the performance of the rear-end heat exchange components can be effectively suppressed.
8. With the annular spoiler centrally disposed on the top wall of the third cathode off-gas distribution chamber, the gas flow is guided by the annular spoiler, making the gas flow smoother, which helps to reduce turbulence generated when the gas enters the fourth cathode off-gas distribution chamber, thereby reducing the pressure drop and improving combustion efficiency.
9. The conical sleeve disposed between the bottom of the combustion chamber and the flue gas outlet pipe can converge the flame shape and improve the wall cooling effect, and can also reduce the influence of rear-end pressure fluctuations on flame combustion stability.
10. By adjusting the positions, numbers, and sizes of the holes in the combustion chamber wall, the top connecting plate, and the bottom connecting plate, the proportion of cathode off-gas participating in flame combustion and wall cooling can be regulated so as to adapt to operating condition parameters of different types of SOFC stacks, thereby fully satisfying the requirement for stable combustion of the SOFC system at a high air-fuel ratio and exhibiting an integrated design characteristic.

### BRIEF DESCRIPTION OF THE DRAWINGS

FIG. 1 is a schematic structural view according to the present application;
FIG. 2 is a schematic internal structural view according to the present application;
FIG. 3 is a schematic top view of a first perforated plate in the present application;
FIG. 4 is a schematic structural view of a spark rod sleeve and anode off-gas nozzle section in the present application;

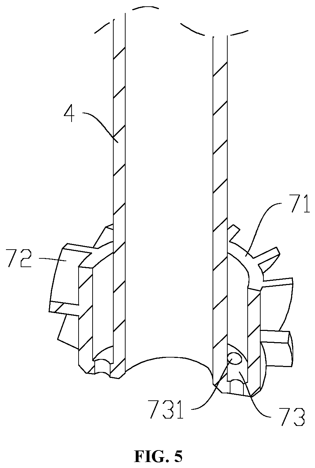

FIG. 5 is a structural cross-sectional view of a spark rod sleeve and anode off-gas nozzle section;
FIG. 6 is a velocity distribution contour map of a flow field of a third perforated plate; and
FIG. 7 is a velocity distribution contour map of a flow field at an anode off-gas nozzle.

### Listing of reference signs:

100. Burner body;
1. Combustion chamber;
11. Top connecting plate; 110. Fourth cathode gas inlet hole;
12. Middle inclined chamber wall; 120. Fifth cathode gas inlet hole;
13. Bottom connecting plate; 130. Sixth cathode gas inlet hole;
14. Flame detector;
2. Anode gas inlet pipe; 3. Cathode gas inlet pipe;
4. Spark rod sleeve; 41. Spark rod;
5. Anode off-gas distribution channel;
51. First anode off-gas distribution chamber;
52. Second anode off-gas distribution chamber; 521. First anode gas inlet hole;
6. Cathode off-gas distribution channel;
61. First cathode off-gas distribution chamber; 62. Second cathode off-gas distribution chamber; 63. Third cathode off-gas distribution chamber; 630. Annular spoiler; 64. Fourth cathode off-gas distribution chamber; 65. Fifth cathode off-gas distribution chamber;
66. First perforated plate; 660. First cathode gas inlet hole; 6601. Outer peripheral cathode gas inlet hole; 6602. Inner peripheral cathode gas inlet hole;
67. Second perforated plate; 670. Second cathode gas inlet hole;
68. Third perforated plate; 680. Third cathode gas inlet hole; 681. Annular flow guide plate;
7. Anode off-gas nozzle; 71. Nozzle sleeve body; 72. Swirl vane; 73. Nozzle end cover plate; 731. Second anode gas inlet hole;
8. Flue gas outlet pipe; 81. Flame baffle; 82. Cooling air inlet pipe;
9. Temperature sensor.

### DETAILED DESCRIPTION OF SPECIFIC EMBODIMENTS

To better understand the objectives, technical solutions and advantages of the present application, the present application will be further explained and described below in conjunction with the accompanying drawings and embodiments. It should be noted that similar reference numerals and letters denote similar items in the following drawings, and therefore, once a certain item is defined in one drawing, it does not need to be further defined and explained in subsequent drawings. It is also noted that the embodiments described below are merely intended to explain the present application, and are not used for limiting the present application.

It should be noted that when an element is described as "fixed to" or "disposed on" another element, it may be directly on the other element, or there may be an intermediate element therebetween, and when an element is described as "connected to" another element, it may be directly connected to the other element, or there may also be an intermediate element therebetween.

Orientation or positional relationships indicated are orientation or positional relationships based on illustrations in the drawings, or orientation or positional relationships in which the claimed product is normally placed during use, or orientation or positional relationships as commonly understood by those skilled in the art, or orientation or positional relationships in which the claimed product is normally placed during use, and are merely for the convenience of describing the present application and simplifying the description, rather than indicating or implying that the indicated apparatuses or components necessarily have specific orientations or are constructed and operated in specific orientations. Therefore, they should not be construed as limiting the present application.

The terms "first", "second", "third", "fourth", "fifth" and "sixth" are used for descriptive purposes only and shall not be construed as indicating or implying relative importance or implicitly indicating the numbers of technical features. The term "a number of" means two or more, unless otherwise expressly and specifically defined.

### Embodiment 1

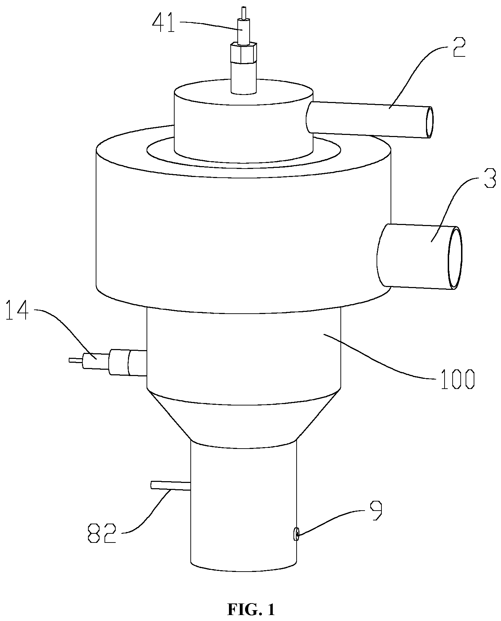

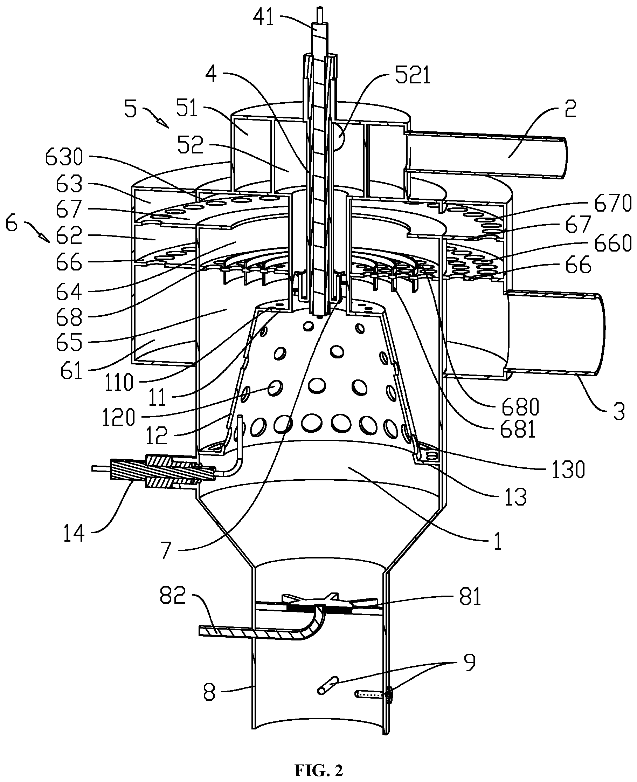

As shown in FIGS. 1 and 2, a single-sided gas intake SOFC burner with a wide operating range and a low pressure drop includes a burner body 100. A spark rod 41 and a flue gas outlet pipe 8 are provided at two opposite ends of the burner body 100. The burner body 100 is composed of a plurality of sleeves nested one within another, with a combustion chamber 1 provided in a central portion of the burner body 100. An anode gas inlet pipe 2 and a cathode gas inlet pipe 3 are provided on the same lateral side of the burner body 100, and are respectively used for introducing anode off-gas and cathode off-gas. The spark rod 41 is centrally positioned at the top of the combustion chamber 1 by means of a spark rod sleeve 4. One end of the spark rod 41 is exposed from a top end of the burner body 100 and extends straight into the burner body 100, such that the other end of the spark rod extends into the combustion chamber 1.

An anode off-gas distribution channel 5 and a cathode off-gas distribution channel 6 are further provided at the top of the combustion chamber 1. The anode off-gas distribution channel 5 is annularly disposed around an outer periphery of the spark rod sleeve 4, and the cathode off-gas distribution channel 6 is annularly disposed around an outer periphery of a lower portion of the anode off-gas distribution channel 5. Both the anode off-gas distribution channel 5 and the cathode off-gas distribution channel 6 are arranged with the spark rod 41 as the center. The spark rod sleeve 4, the anode off-gas distribution channel 5, and the cathode off-gas distribution channel 6 are mutually isolated. The anode off-gas distribution channel 5 communicates the anode gas inlet pipe 2 with the combustion chamber 1, and the cathode off-gas distribution channel 6 communicates the cathode gas inlet pipe 3 with the combustion chamber 1.

Hence, after passing through corresponding off-gas distribution channels that are independent from each other, the anode off-gas and the cathode off-gas are both configured to be uniformly introduced into the combustion chamber 1 in a toroidal flow pattern. The anode off-gas enters the combustion chamber 1 through the anode off-gas distribution channel 5, and the cathode off-gas enters the combustion chamber 1 through the cathode off-gas distribution channel 6 on the outer side. Since both the anode off-gas distribution channel 5 and the cathode off-gas distribution channel 6 are arranged with the spark rod 41 as the center, it can ensure uniform toroidal distribution of the two types of off-gas upon entering the combustion chamber 1, thereby facilitating thorough mixing and combustion of the off-gas within the combustion chamber 1. Ignition is performed centrally by the spark rod 41 to avoid flame deflection and reduce local overheating or incomplete combustion, thereby achieving a more stable combustion state, facilitating stable combustion over a wide operating range, and reducing a pressure drop caused by uneven gas distribution.

In other optional embodiments, an insertion depth of the spark rod 41 into the combustion chamber 1 is adjustable along an axis of the spark rod sleeve 4. Specifically, the spark rod is connected to a burner housing through threads to facilitate adjustment of an ignition position and to facilitate later disassembly, replacement and maintenance. A user can quickly adjust the insertion depth of the spark rod 41 according to different combustion requirements to optimize the ignition effect. This simplifies maintenance work, facilitates replacement of the spark rod 41 when necessary, and improves equipment reliability and maintenance efficiency.

In this embodiment, the anode off-gas distribution channel 5 includes a first anode off-gas distribution chamber 51 and a second anode off-gas distribution chamber 52 sequentially sleeved around the outer periphery of the spark rod sleeve 4 from outside to inside. A side wall of the first anode off-gas distribution chamber 51 is connected to the anode gas inlet pipe 2. A side wall of the second anode off-gas distribution chamber 52 is provided with a first anode gas inlet hole 521. The first anode gas inlet hole 521 communicates the first anode off-gas distribution chamber 51 with the second anode off-gas distribution chamber 52. A bottom passage of the second anode off-gas distribution chamber 52 extends downward along the spark rod sleeve 4 and is connected to the combustion chamber 1. Through this structure, the anode off-gas first enters the first anode off-gas distribution chamber 51 through the anode gas inlet pipe 2, then enters the second anode off-gas distribution chamber 52 through the first anode gas inlet hole 521, and finally enters the combustion chamber 1 through the bottom passage of the second anode off-gas distribution chamber 52.

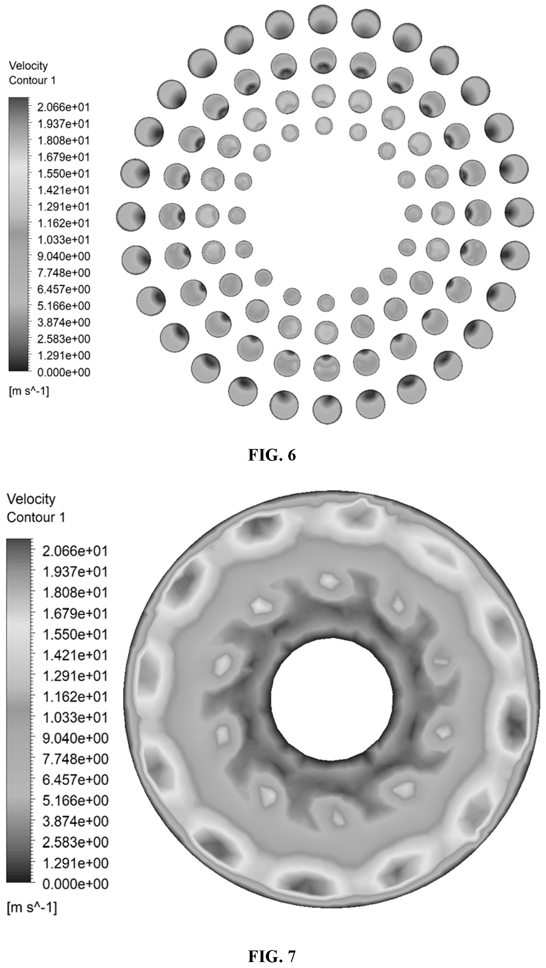

An anode off-gas nozzle 7 is provided between a bottom passage of the anode off-gas distribution channel 5 and a tail end of the spark rod sleeve 4. The anode off-gas nozzle 7 includes a nozzle sleeve body 71. A plurality of inclined swirl vanes 72 are provided on an outer peripheral surface of the nozzle sleeve body 71. The nozzle sleeve body 71 and the tail end of the spark rod sleeve 4 are formed integrally, with a nozzle end cover plate 73 formed at the junction therebetween, and a plurality of second anode gas inlet holes 731 are uniformly formed in the nozzle end cover plate 73. Through this structure, the anode off-gas is split into two streams at the anode off-gas nozzle 7. One stream flows through the second anode gas inlet holes 731 into the combustion chamber 1, and the other stream flows through the swirl vanes 72 and then into the combustion chamber 1, thereby achieving that one stream of anode off-gas enters the combustion chamber 1 as a jet when flowing through the second anode gas inlet holes 731, and the other stream of anode off-gas enters the combustion chamber 1 in a rotating manner when flowing through the swirl vanes 72. In this combined gas intake mode, a recirculation vortex can be generated in the combustion chamber 1. On the one hand, the recirculating vortex enhances the mixing of the anode off-gas with the cathode off-gas in the combustion chamber 1, thereby effectively improving anode off-gas combustion efficiency of an SOFC system in various operating stages. On the other hand, by entraining high-temperature flue gas in the combustion chamber 1, the recirculation vortex can effectively maintain continuous and stable flame combustion. Referring to a velocity distribution contour map at the anode off-gas nozzle shown in FIG. 7, as can be seen from the figure, a cathode off-gas flow velocity around the anode off-gas nozzle is uniform in a circumferential direction thereof.

In this embodiment, the cathode off-gas distribution channel 6 includes an outer peripheral cathode off-gas distribution channel and an inner peripheral cathode off-gas distribution channel. A side wall of the outer peripheral cathode off-gas distribution channel is connected to the cathode gas inlet pipe 3. The top of the inner peripheral cathode off-gas distribution channel has an opening and is in communication with the top of the outer peripheral cathode off-gas distribution channel, and the bottom of the inner peripheral cathode off-gas distribution channel surrounds the combustion chamber 1. The cathode off-gas is configured to enter the outer peripheral cathode off-gas distribution channel through the cathode gas inlet pipe 3, and flow upward and inward into the inner peripheral cathode off-gas distribution channel, and then flow downward into the combustion chamber 1. Through this structure, the cathode off-gas first enters the outer peripheral cathode off-gas distribution channel through the cathode gas inlet pipe 3, and the cathode off-gas flows upward in the outer peripheral cathode off-gas distribution channel. Upon reaching the top of the outer peripheral cathode off-gas distribution channel, the cathode off-gas enters the inner peripheral cathode off-gas distribution channel through the opening at the top. After passing through the inner peripheral cathode off-gas distribution channel, the cathode off-gas flows downward into the combustion chamber 1, and is mixed with the anode off-gas and undergoes combustion. Hence, the cathode off-gas in the unilateral gas intake mode first passes through the outer peripheral cathode off-gas distribution channel, and then passes through the inner peripheral cathode off-gas distribution channel. The rational gas flow path facilitates uniform dispersion of the cathode off-gas during flow, reduces the pressure drop during gas flow, and ensures uniform distribution of the cathode off-gas upon entering the combustion chamber 1 so as to achieve effective mixing with the anode off-gas, thereby improving combustion efficiency.

In a specific embodiment, the outer peripheral cathode off-gas distribution channel includes a first cathode off-gas distribution chamber 61, a second cathode off-gas distribution chamber 62, and a third cathode off-gas distribution chamber 63 arranged in a hierarchical distribution from bottom to top. A first perforated plate 66 is disposed between the first cathode off-gas distribution chamber 61 and the second cathode off-gas distribution chamber 62. The first perforated plate 66 is provided with a plurality of first cathode gas inlet holes 660. A second perforated plate 67 is disposed between the second cathode off-gas distribution chamber 62 and the third cathode off-gas distribution chamber 63. The second perforated plate 67 is provided with a plurality of second cathode gas inlet holes 670. The second perforated plate 67 is provided in the middle thereof with a through hole that communicates the third cathode off-gas distribution chamber 63 with the inner peripheral cathode off-gas distribution channel. Through this structure, the cathode off-gas first enters the first cathode off-gas distribution chamber 61 through the cathode gas inlet pipe 3, then enters the second cathode off-gas distribution chamber 62 through the first cathode gas inlet holes 660 on the first perforated plate 66, subsequently enters the third cathode off-gas distribution chamber 63 through the second cathode gas inlet holes 670 on the second perforated plate 67, and finally enters the inner peripheral cathode off-gas distribution channel through the through hole in the middle of the second perforated plate 67.

The structural design of the distribution chamber in which the outer peripheral cathode off-gas distribution channel is distributed in multiple layers enables the cathode off-gas to undergo multiple short residence times, further dispersing the cathode off-gas during flow, and ensuring that the cathode off-gas enters the inner peripheral cathode off-gas distribution channel in a relatively uniform manner.

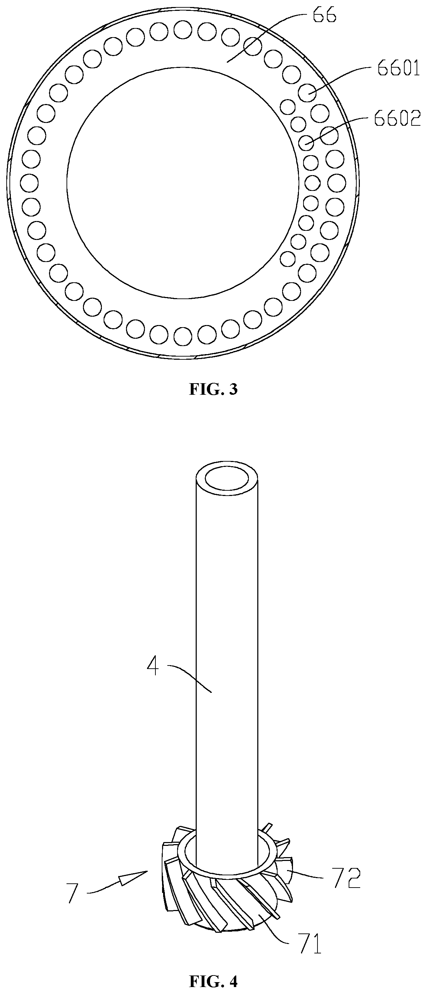

As shown in FIG. 3, additionally, to ensure smooth flow of the cathode off-gas into the cathode off-gas distribution channel 6 after entering from a single side, and considering a relatively high flow rate of the cathode off-gas, in this embodiment, the first cathode gas inlet holes 660 include outer peripheral cathode gas inlet holes 6601 and inner peripheral cathode gas inlet holes 6602, wherein the outer peripheral cathode gas inlet holes 6601 are distributed in a circumferential array along an outer periphery of the first perforated plate 66, and the inner peripheral cathode gas inlet holes 6602 are distributed in an arc pattern on a side of the first perforated plate 66 close to the cathode gas inlet pipe 3; and the second cathode gas inlet holes 670 are uniformly distributed along an outer periphery of the second perforated plate 67. Through this structure, the side of the first perforated plate 66 close to a gas inlet end is additionally provided with the inner peripheral cathode gas inlet holes 6602 compared with the opposite side, such that more gas inlet holes are formed on the side close to the gas inlet end. This allows the cathode off-gas in the first cathode off-gas distribution chamber 61 to flow smoothly into the second cathode off-gas distribution chamber 62, preventing accumulation on a single side within the first cathode off-gas distribution chamber 61. The cathode off-gas in the second cathode off-gas distribution chamber 62 can enter the third cathode off-gas distribution chamber 63 in a relatively uniform manner after passing through the uniformly distributed inlet holes.

The inner peripheral cathode off-gas distribution channel includes a fourth cathode off-gas distribution chamber 64 and a fifth cathode off-gas distribution chamber 65 arranged in a hierarchical distribution from top to bottom. A third perforated plate 68 is disposed between the fourth cathode off-gas distribution chamber 64 and the fifth cathode off-gas distribution chamber 65. The third perforated plate 68 is provided with third cathode gas inlet holes 680 arranged in a plurality of ring patterns, with an annular guide plate 681 being provided between every two adjacent ring patterns of the third cathode gas inlet holes 680. The annular guide plate 681 is configured to disperse the cathode off-gas and direct gas flow. Through this structure, the cathode off-gas enters the fourth cathode off-gas distribution chamber 64 from the third cathode off-gas distribution chamber 63 through the through hole in the middle of the second perforated plate 67, and then enters the fifth cathode off-gas distribution chamber 65 through the third cathode gas inlet holes 680 on the third perforated plate 68. As the cathode off-gas passes through the third perforated plate 68, the third cathode gas inlet holes 680 disperse the cathode off-gas and direct the gas flow, ensuring uniform distribution of the gas flow. Referring to a velocity distribution contour map of a flow field of the third perforated plate shown in FIG. 6, as can be seen from the figure, a cathode off-gas flow velocity around the third perforated plate 68 is uniform in a circumferential direction thereof, and the cathode off-gas can uniformly enter the fifth cathode off-gas distribution chamber 65 from the fourth cathode off-gas distribution chamber 64, be mixed fully with the anode off-gas and undergo combustion.

In this embodiment, an outer lateral wall of the bottom of the combustion chamber 1 is formed by a side wall of the cathode off-gas distribution channel 6 extending downward, which helps to make the structure of burner body 100 more compact and reduce its size. The outer lateral wall of the bottom of the combustion chamber 1 is provided with a flame detector 14. The flame detector 14 is configured to monitor a state of the flame within combustion chamber 1 in real time, enabling timely acquisition of flame signals in the combustion chamber 1 and ensuring the stability and safety of the combustion process.

A front end of the flue gas outlet pipe 8 is provided with a flame baffle 81, and a middle portion of the flame baffle 81 is connected to a cooling air inlet pipe 82, with a plurality of partition strips being uniformly distributed around the flame baffle 81, such that the flame baffle 81 has a radial configuration. Providing the flame baffle 81 in the flue gas outlet pipe 8 not only can prevent the combustion flame from being excessively long, thereby avoiding damage or adverse effects on rear-end heat exchanger components, but also can enhance the mixing of the high-temperature flue gas with the cathode off-gas, thereby reducing a circumferential temperature difference of a flue gas cross-section and improving heat-exchange efficiency of the rear-end heat exchange components. With the cooling air inlet pipe 82 provided at the center of the flame baffle 81, flue gas temperature at a burner outlet can be flexibly regulated by adjusting the amount of cooling air, without affecting a front-end combustion structure. Moreover, by generating turbulence through the flame baffle 81 to enhance the mixing of the high-temperature flue gas with the cooling air, the influence of uneven flue-gas temperature on the performance of the rear-end heat exchange components can be effectively suppressed.

At least one temperature sensor 9 is provided below the flame baffle 81 of the flue gas outlet pipe 8 to monitor flue gas temperature within the flue gas outlet pipe 8 in real time. In this embodiment, the flue gas outlet pipe 8 is provided with two temperature sensors 9.

The use process of the above-described technical solution is as follows. The spark rod 41 is activated to ignite the mixed gas within the combustion chamber 1. The flame detector 14 detects the flue gas to determine whether combustion has occurred and transmits a signal to a controller. The controller determines whether to activate the spark rod 41 based on the feedback signal from the flame detector 14. After flowing through the flame baffle 81, the flue gas after combustion can reduce the combustion flame length and enhance the mixing. The cooling air enters the flue gas through the cooling air inlet pipe 82, enabling flexible adjustment of the flue gas temperature at the burner outlet. Finally, the flue gas flows through a first temperature sensor and a second temperature sensor for temperature measurement, and then flows out through the flue gas outlet pipe 8.

In summary, the single-sided gas intake SOFC burner with a wide operating range and a low pressure drop according to the present application has a compact structural design and a low flow path pressure drop, thereby reducing the system volume and blower power consumption, and helping to improve overall power generation efficiency of the SOFC system.

### Embodiment 2

A single-sided gas intake SOFC burner with a wide operating range and a low pressure drop shares the same structure as Embodiment 1: having an anode off-gas distribution channel 5 and a cathode off-gas distribution channel 6, the anode off-gas distribution channel 5 including a first anode off-gas distribution chamber 51 and a second anode off-gas distribution chamber 52, the cathode off-gas distribution channel 6 including a first cathode off-gas distribution chamber 61, a second cathode off-gas distribution chamber 62, a third cathode off-gas distribution chamber 63, a fourth cathode off-gas distribution chamber 64, and a fifth cathode off-gas distribution chamber 65. The difference lies in that: an annular spoiler 630 is centrally provided on a top wall of the third cathode off-gas distribution chamber 63, and the annular spoiler 630 is configured to guide and disperse the cathode off-gas, such that the cathode off-gas uniformly flows toward the inner peripheral cathode off-gas distribution channel. Guiding the gas flow by the annular spoiler 630 makes the gas flow smoother, which helps to reduce turbulence generated when the gas enters the fourth cathode off-gas distribution chamber 64, thereby reducing the pressure drop and improving combustion efficiency.

### Embodiment 3

A single-sided gas intake SOFC burner with a wide operating range and a low pressure drop shares the same structure as Embodiment 1 or Embodiment 2: having an anode off-gas distribution channel 5 and a cathode off-gas distribution channel 6, the cathode off-gas distribution channel 6 including a first cathode off-gas distribution chamber 61, a second cathode off-gas distribution chamber 62, a third cathode off-gas distribution chamber 63, a fourth cathode off-gas distribution chamber 64, and a fifth cathode off-gas distribution chamber 65. The burner has differences as follows:
In this embodiment, the bottom of the combustion chamber 1 is connected to a flue gas outlet pipe 8 through a conical sleeve. The conical sleeve can converge the flame shape and improve the wall cooling effect, and can also reduce the influence of rear-end pressure fluctuations on flame combustion stability.

The combustion chamber 1 has a truncated cone shape, and includes a top connecting plate 11, a middle inclined chamber wall 12, and a bottom connecting plate 13, wherein the top connecting plate 11 is provided with an opening in the middle thereof and is connected to the anode off-gas distribution channel 5, and the bottom connecting plate 13 is connected to the cathode off-gas distribution channel 6; and the top connecting plate 11 is provided with a plurality of fourth cathode gas inlet holes 110 distributed around an outer side of the anode off-gas distribution channel 5, the middle inclined chamber wall 12 is provided with a plurality of fifth cathode gas inlet holes 120, and the bottom connecting plate 13 is provided with a plurality of sixth cathode gas inlet holes 130. Through this structure, the cathode off-gas is divided into three streams within the fifth cathode off-gas distribution chamber 65. A first stream of cathode off-gas enters the combustion chamber 1 through the fourth cathode gas inlet holes 110. This portion of cathode off-gas can blow the high-temperature flue gas entrained by the recirculating vortex away from the top connecting plate 11 to prevent overheating of the wall surface of the top connecting plate 11. A second stream of cathode off-gas enters the combustion chamber 1 through the fifth cathode gas inlet holes 120. A portion of the cathode off-gas enters a flame region to participate in a combustion process so as to improve the combustion efficiency of the anode off-gas, and the other portion can form a gas flow protective layer between the high-temperature flame and the wall surface of the combustion chamber 1, thereby effectively preventing flame deviation and reducing heat transfer from the high-temperature flue gas to the wall of the combustion chamber 1. A third stream of cathode off-gas enters the combustion chamber 1 through the sixth cathode gas inlet holes 130, such that a gas flow protective layer can be formed between the high-temperature flue gas and the bottom of the combustion chamber 1, the conical sleeve, and the flue gas outlet pipe 8, thereby preventing the high-temperature flue gas from eroding the metal wall and causing structural failure.

In the above-described solution, by adjusting the positions, numbers, and sizes of the holes in the combustion chamber wall, the top connecting plate, and the bottom connecting plate, the proportion of cathode off-gas participating in flame combustion and wall cooling can be regulated so as to adapt to operating condition parameters of different types of SOFC stacks, thereby fully satisfying the requirement for stable combustion of the SOFC system at a high air-fuel ratio and exhibiting an integrated design characteristic.

The technical features of the above embodiments can be combined in any way. For the sake of brevity of the description, not all possible combinations of the technical features in the above embodiments are described. However, as long as there are no contradictions in the combinations of the technical features, such combinations shall be considered to be within the scope of this specification.

The above embodiments merely illustrate several implementations of the present application. Although the description thereof is relatively specific and detailed, it should not be construed as limiting the patent scope of the invention. It should be noted that for those of ordinary skill in the art, various modifications and improvements may also be made without departing from the concept of the present application, and all the modifications and improvements are encompassed within the protection scope of the present application. Therefore, the protection scope of the present application shall be defined by the appended claims.

## Claims

1. A single-sided gas intake solid oxide fuel cell (SOFC) burner with a wide operating range and a low pressure drop, comprising a combustion chamber (1), and an anode gas inlet pipe (2) and a cathode gas inlet pipe (3) which are located on the same lateral side, the combustion chamber (1) being further provided with a spark rod (41), wherein a spark rod sleeve (4) is centrally positioned at the top of the combustion chamber (1), and the spark rod (41) is inserted into the spark rod sleeve (4) and extends into the combustion chamber (1);
an anode off-gas distribution channel (5) and a cathode off-gas distribution channel (6) are further provided at the top of the combustion chamber (1), the anode off-gas distribution channel (5) being annularly disposed around an outer periphery of the spark rod sleeve (4), and the cathode off-gas distribution channel (6) being annularly disposed around an outer periphery of a lower portion of the anode off-gas distribution channel (5);
the anode off-gas distribution channel (5) communicates the anode gas inlet pipe (2) with the combustion chamber (1), and the cathode off-gas distribution channel (6) communicates the cathode gas inlet pipe (3) with the combustion chamber (1); and after passing through corresponding off-gas distribution channels that are independent from each other, anode off-gas and cathode off-gas are both configured to be uniformly introduced into the combustion chamber (1) in a toroidal flow pattern.

2. The single-sided gas intake SOFC burner with a wide operating range and a low pressure drop according to claim 1, wherein an insertion depth of the spark rod (41) into the combustion chamber (1) is adjustable along an axis of the spark rod sleeve (4).

3. The single-sided gas intake SOFC burner with a wide operating range and a low pressure drop according to claim 1, wherein the anode off-gas distribution channel (5) comprises a first anode off-gas distribution chamber (51) and a second anode off-gas distribution chamber (52) sequentially sleeved around the outer periphery of the spark rod sleeve (4) from outside to inside, wherein a side wall of the first anode off-gas distribution chamber (51) is connected to the anode gas inlet pipe (2); a side wall of the second anode off-gas distribution chamber (52) is provided with a first anode gas inlet hole (521) for communicating the first anode off-gas distribution chamber (51) with the second anode off-gas distribution chamber (52); and a bottom passage of the second anode off-gas distribution chamber (52) extends downward along the spark rod sleeve (4) and is connected to the combustion chamber (1).

4. The single-sided gas intake SOFC burner with a wide operating range and a low pressure drop according to claim 1 or 3, wherein an anode off-gas nozzle (7) is provided between a bottom passage of the anode off-gas distribution channel (5) and a tail end of the spark rod sleeve (4), the anode off-gas nozzle (7) comprising a nozzle sleeve body (71), wherein a plurality of inclined swirl vanes (72) are provided on an outer peripheral surface of the nozzle sleeve body (71); and the nozzle sleeve body (71) and the tail end of the spark rod sleeve (4) are formed integrally, with a nozzle end cover plate (73) formed at the junction therebetween, and a plurality of second anode gas inlet holes (731) are uniformly formed in the nozzle end cover plate (73).

5. The single-sided gas intake SOFC burner with a wide operating range and a low pressure drop according to claim 1, wherein the cathode off-gas distribution channel (6) comprises an outer peripheral cathode off-gas distribution channel and an inner peripheral cathode off-gas distribution channel, wherein a side wall of the outer peripheral cathode off-gas distribution channel is connected to the cathode gas inlet pipe (3); the top of the inner peripheral cathode off-gas distribution channel has an opening and is in communication with the top of the outer peripheral cathode off-gas distribution channel, and the bottom of the inner peripheral cathode off-gas distribution channel surrounds the combustion chamber (1); and
the cathode off-gas is configured to enter the outer peripheral cathode off-gas distribution channel through the cathode gas inlet pipe (3), and flow upward and inward into the inner peripheral cathode off-gas distribution channel, and then flow downward into the combustion chamber (1).

6. The single-sided gas intake SOFC burner with a wide operating range and a low pressure drop according to claim 5, wherein the outer peripheral cathode off-gas distribution channel comprises a first cathode off-gas distribution chamber (61), a second cathode off-gas distribution chamber (62), and a third cathode off-gas distribution chamber (63) arranged in a hierarchical distribution from bottom to top, wherein a first perforated plate (66) is disposed between the first cathode off-gas distribution chamber (61) and the second cathode off-gas distribution chamber (62), the first perforated plate (66) being provided with a plurality of first cathode gas inlet holes (660); and a second perforated plate (67) is disposed between the second cathode off-gas distribution chamber (62) and the third cathode off-gas distribution chamber (63), the second perforated plate (67) being provided with a plurality of second cathode gas inlet holes (670), and the second perforated plate (67) being provided in the middle thereof with a through hole that communicates the third cathode off-gas distribution chamber (63) with the inner peripheral cathode off-gas distribution channel.

7. The single-sided gas intake SOFC burner with a wide operating range and a low pressure drop according to claim 6, wherein the first cathode gas inlet holes (660) comprise outer peripheral cathode gas inlet holes (6601) and inner peripheral cathode gas inlet holes (6602), wherein the outer peripheral cathode gas inlet holes (6601) are distributed in a circumferential array along an outer periphery of the first perforated plate (66), and the inner peripheral cathode gas inlet holes (6602) are distributed in an arc pattern on a side of the first perforated plate (66) close to the cathode gas inlet pipe (3); and the second cathode gas inlet holes (670) are uniformly distributed along an outer periphery of the second perforated plate (67).

8. The single-sided gas intake SOFC burner with a wide operating range and a low pressure drop according to claim 6 or 7, wherein an annular spoiler (630) is centrally provided on a top wall of the third cathode off-gas distribution chamber (63), and the annular spoiler (630) is configured to guide and disperse the cathode off-gas, such that the cathode off-gas uniformly flows toward the inner peripheral cathode off-gas distribution channel.

9. The single-sided gas intake SOFC burner with a wide operating range and a low pressure drop according to any one of claims 5 to 7, wherein the inner peripheral cathode off-gas distribution channel comprises a fourth cathode off-gas distribution chamber (64) and a fifth cathode off-gas distribution chamber (65) arranged in a hierarchical distribution from top to bottom, wherein a third perforated plate (68) is disposed between the fourth cathode off-gas distribution chamber (64) and the fifth cathode off-gas distribution chamber (65), the third perforated plate (68) being provided with third cathode gas inlet holes (680) arranged in a plurality of ring patterns, with an annular guide plate (681) being provided between every two adjacent ring patterns of the third cathode gas inlet holes (680), the annular guide plate (681) being configured to disperse the cathode off-gas and direct gas flow.

10. The single-sided gas intake SOFC burner with a wide operating range and a low pressure drop according to any one of claims 1 to 3, and 5 to 7, wherein the combustion chamber (1) has a truncated cone shape, and comprises a top connecting plate (11), a middle inclined chamber wall (12), and a bottom connecting plate (13), wherein the top connecting plate (11) is provided with an opening in the middle thereof and is connected to the anode off-gas distribution channel (5), and the bottom connecting plate (13) is connected to the cathode off-gas distribution channel (6); and the top connecting plate (11) is provided with a plurality of fourth cathode gas inlet holes (110) distributed around an outer side of the anode off-gas distribution channel (5), the middle inclined chamber wall (12) is provided with a plurality of fifth cathode gas inlet holes (120), and the bottom connecting plate (13) is provided with a plurality of sixth cathode gas inlet holes (130).
